# EUROPEAN PATENT APPLICATION

(11) **EP 4 299 664 A1**
(43) Date of publication of application: **03.01.2024**
(21) Application number: 21928199.5
(22) Date of filing: 19.08.2021
(51) Int. Cl.: C08L 23/00

(54) **POWDER-TYPE ADDITIVE COMPRISING CROSS-LINKED RESIN, AND RESIN COMPOSITION COMPRISING SAME**

(30) Priority: 25.02.2021 KR 20210025380
(71) Applicant: LS Cable & System Ltd., Anyang-si, Gyeonggi-do 14119 (KR)
(72) Inventor: HEO, Sung Ik, Gunpo-si, Gyeonggi-do 15874 (KR); NAM, Gi Joon, Seoul 06510 (KR); SHIN, Jung In, Hwaseong-si, Gyeonggi-do 18357 (KR); SHIN, Ji Wook, Uiwang-si, Gyeonggi-do 16036 (KR)
(74) Representative: K&L Gates LLP
(86) International application number: PCT/KR2021/011011
(87) International publication number: WO 2022/181905

(57) **Abstract**

Provided is a powder type additive including a cross-linked resin and a resin composition including the same. Specifically, the present invention relates to a powder type additive including a cross-linked resin, which improves mechanical properties, such tensile strength, elongation, and hardness, of a resin composition to be added and effectively suppresses sagging when the resin composition is extruded, is highly compatible with a base resin of the resin composition and thus does not deteriorate physical properties of the base resin, contributes to cost saving by recycling the cross-linked resin, and is eco-friendly, and a resin composition including the same.

## Description

### [Technical Field]

The present invention relates to a powder type additive including a cross-linked resin and a resin composition including the same. Specifically, the present invention relates to a powder type additive including a cross-linked resin, which improves mechanical properties, such tensile strength, elongation, and hardness, of a resin composition to be added and effectively suppresses sagging when the resin composition is extruded, is highly compatible with a base resin of the resin composition and thus does not deteriorate physical properties of the base resin, contributes to cost saving by recycling the cross-linked resin, and is eco-friendly, and a resin composition including the same.

### [Background Art]

A polymer resin generally referred to as plastic has been used for various purposes, because it has excellent physical properties, e.g., electrical properties such as electrical insulating properties and permittivity, mechanical properties such as strength, elongation, hardness, flexibility, and wear resistance, and chemical properties such as chemical resistance, oil resistance, water resistance, weather resistance, and flame retardancy, according to a type thereof, and is lighter than a metal.

However, because it is difficult to satisfy all physical properties required for a usage of the polymer resin at the same time, the physical properties may be improved by using a resin composition prepared by mixing two or more types of polymer resins, using an engineering plastic resin with excellent physical properties compared to other types of polymer resins, adding various additives to the polymer resin, or forming a cross-linked resin by a crosslinking process after molding such as extrusion.

However, when a mixture of two or more types of polymer resins is used as a resin composition, it may be difficult to mix the polymer resins due to low compatibility therebetween, add or select an additive due to low compatibility with some of the polymer resins, or adjust required physical properties by mixing the polymer resins.

Even when the engineering plastic resin with excellent physical properties is used, it is difficult to satisfy all physical properties required for a usage at the same time. Particularly, the engineering plastic resin is relatively expensive, thus increasing manufacturing costs.

Furthermore, various additives such as a reinforcing agent and a flame retardant may be added to a polymer resin but viscosity may increase and processability and moldability may decrease due to the addition of the additives. Environmental problems may occur when an added additive is, for example, a halogen-based additive that is not an eco-friendly additive. When a crosslinking process is performed after molding such as the extrusion of the polymer resin, a manufacturing yield may decrease because crosslinking facility should be provided and the crosslinking process should be performed, thus increasing manufacturing costs.

Accordingly, there is an urgent need for an additive which improves mechanical properties, such tensile strength, elongation, and hardness, of a resin composition to be added and effectively suppresses sagging when the resin composition is extruded, is highly compatible with a base resin of the resin composition and thus does not deteriorate the physical properties of the base resin, contributes to cost saving, and is eco-friendly, and a resin composition including the same.

### [Disclosure]

### [Technical Problem]

The present invention is directed to providing a powder type additive for improving mechanical properties, such as tensile strength, elongation, and hardness, of a resin composition to be added and effectively suppressing sagging when the resin composition is extruded.

The present invention is directed to providing a powder type additive which is highly compatible with a base resin of a resin composition and thus does not deteriorate physical properties of the base resin, contribute to saving costs, and is eco-friendly, and a resin composition including the same.

### [Technical Solution]

According to an aspect of the present invention, provided is a powder type additive comprising a cross-linked resin, wherein the crosslinked resin comprises a cross-linked polyolefin-based resin, and has a gel fraction of 10 to 50% and a particle size (D₅₀) of 100 to 700 um.

According to another aspect of the present invention, provided is the powder type additive, wherein the cross-linked resin has a weight average molecular weight (Mw) of 10,000 or more.

According to other aspect of the present invention, provided is the powder type additive, wherein the cross-linked resin has a melting point of 110 °C or higher, specific gravity of 0.91 or more, tensile strength of 1.75 kgf/mm²or more, and elongation of 360% or more.

According to other aspect of the present invention, provided is the powder type additive, wherein the gel fraction of the cross-linked resin is in a range of 20 to 35%, and the particle size (D₅₀) is in a range of 150 to 500 um.

According to other aspect of the present invention, provided is the powder type additive, wherein the particle size (D₅₀) is in a range of 150 to 350 um.

According to other aspect of the present invention, provided is the powder type additive, wherein the polyolefin-based resin comprises at least one selected from the group consisting of low-density polyethylene (LDPE), linear low-density polyethylene (LLDPE), high-density polyethylene (HDPE), polypropylene (PP), polyolefin elastomer (POE), ethylene vinyl acetate (EVA), ethylene ethyl acrylate (EEA), ethylene butyl acrylate (EBA), ethylene propylene rubber (EPR), and ethylene propylene diene rubber (EPDM).

According to an aspect of the present invention, provided is a resin composition comprising a base resin and the powder type additive.

According to another aspect of the present invention, provided is the resin composition, wherein the powder type additive is contained in an amount of 10 to 30% by weight based on the total weight of the resin composition.

According to other aspect of the present invention, provided is the resin composition, wherein the base resin and the polyolefin-based resin of the powder type additive are the same resin.

According to other aspect of the present invention, provided is the resin composition, wherein Shore A hardness is 80 or more and tensile strength is 1.6 kgf/mm² or more.

### [Advantageous Effects]

A powder type additive according to the present invention includes a cross-linked resin whose particle size and gel fraction are adjusted to improve mechanical properties, such as tensile strength, elongation, and hardness, of a resin composition to be added and which effectively suppresses sagging when the resin composition is extruded.

In addition, the powder type additive according to the present invention is a polymer resin material and therefore is highly compatible with a base resin of a resin composition to be added and thus does not deteriorate physical properties of the base resin, contributes to cost saving by recycling a cross-linked resin obtained by crosslinking after molding, and is eco-friendly.

### [Description of Drawings]

FIG. 1 is a photograph of a powder type additive according to the present invention.
FIG. 2 show micrographs of Comparative Example 1 and Example 3.

### [Mode for Invention]

Hereinafter, example embodiments of the present invention will be described in detail. The present invention is, however, not limited thereto and may be embodied in many different forms. Rather, the embodiments set forth herein are provided so that this disclosure may be thorough and complete and fully convey the scope of the invention to those skilled in the art.

The present invention relates to a powder type additive including a cross-linked resin.

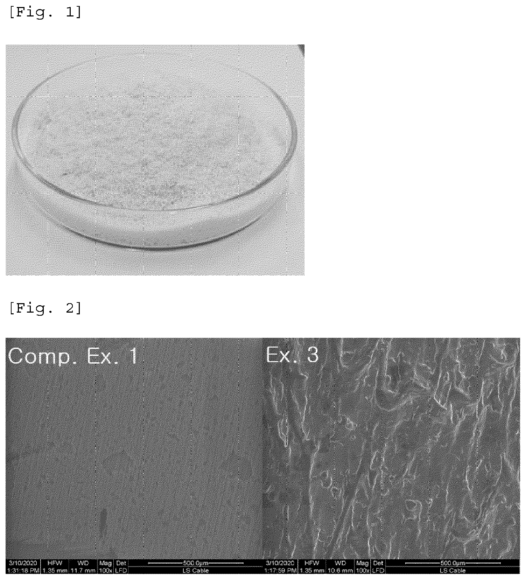

As shown in FIG. 1, the powder type additive according to the present invention may be prepared by pulverizing a cross-linked resin, which has already been molded to manufacture a specific product or part thereof, in batch or continuous equipment, such as a twin screw extruder, a single screw extruder, a Banbury mixer, or a particle grinder, at a barrel temperature of less than 200 °C and a speed of 400 rpm or more.

Specifically, the cross-linked resin may include a cross-linked resin prepared by crosslinking polyolefin-based resin, e.g., low-density polyethylene (LDPE), linear low-density polyethylene (LLDPE), high-density polyethylene (HOPE), polypropylene (PP), polyolefin elastomer (POE), ethylene vinyl acetate (EVA), ethylene ethyl acrylate (EEA), ethylene butyl acrylate (EBA), ethylene propylene rubber (EPR), and ethylene propylene diene rubber (EPDM), by moisture crosslinking, chemical crosslinking, irradiation crosslinking or the like. A gel fraction representing a degree of crosslinking of the cross-linked resin may be in a range of 10 to 50%, and preferably, a range of 20 to 35%.

Here, when the gel fraction of the cross-linked resin is less than 10%, a reinforcement effect achieved when the powder type additive is added may decrease greatly, whereas when the gel fraction of the cross-linked resin is greater than 50%, long-term moldability of the resin composition to which the powder type additive is added may decrease greatly.

The cross-linked resin may have a weight average molecular weight (Mw) of 10,000 or more, for example, 10,000 to 200,000. Here, when the weight average molecular weight (Mw) of the cross-linked resin is less than 10,000, a reinforcement effect achieved by adding the powder type additive may be insufficient. Furthermore, the cross-linked resin may have a melting point of 110 °C or higher, specific gravity of 0.91 or more, tensile strength of 1.75 kgf/mm²or more, and elongation of 360% or more.

Meanwhile, the powder type additive may have a particle size of 100 to 700 um, preferably, 150 to 500 µm, and more preferably, 150 to 350 um. Here, the particle size should be understood as a particle diameter D₅₀ corresponding to 50% of a maximum size in a particle size distribution. When the particle size D₅₀ of the powder type additive is less than 100 um, a reinforcing effect achieved by adding the powder type additive decreases, whereas when the particle size D₅₀ of the powder type additive is greater than 700 µm, the fluidity of the resin composition to which the powder type additive is added decreases, thus resulting in a reduction in processability and moldability.

In the past, two or more types of polymer resins were combined, expensive engineering plastic resin was used, a general additive was used, or a crosslinking process was used to improve physical properties required for a usage of a polymer resin. However, there were no precedents in which a cross-linked resin used to manufacture a molded product is recycled as a powder type additive. A powder type additive including a cross-linked resin according to the present invention may improve mechanical properties, such as tensile strength, elongation, and hardness, of a resin composition to be added, may effectively suppress sagging when the resin composition is extruded, is highly compatible with a base resin of the added resin composition and thus does not deteriorate physical properties of the base resin, may contribute to saving costs, and is eco-friendly.

The present invention relates to a resin composition in which the powder type additive is added to a base resin.

The base resin is a resin that has yet to be cross-linked to form the cross-linked resin included in the powder type additive, and may include, for example, low-density polyethylene (LDPE), linear low-density polyethylene (LLDPE), high-density polyethylene (HDPE), polypropylene (PP), polyolefin elastomer (POE), ethylene vinyl acetate (EVA), ethylene ethyl acrylate (EEA), ethylenebutyl acrylate (EBA), ethylenepropylene rubber (EPR), ethylenepropylene diene rubbber (EPDM), and the like.

Particularly, the powder type additive may be contained in an amount of 10 to 30% by weight based on the total weight of the resin composition. Here, when the amount of the powder type additive is less than 10% by weight, the strength or hardness of the resin composition may be insufficient, whereas when the amount of the powder type additive is greater than 30% by weight, the extrudability and processability of the resin composition may decrease. Thus, the resin composition may have Shore A hardness of 80 or more and tensile strength of 1.6 kgf/mm² or more.

### [Examples]

### 1. Preparation example

Resin compositions and press samples thereof were prepared using components in amounts defined in Table 1 below. Units of the amounts shown in Table 1 below are % by weight.

**[Table 1]**

| Example | Base resin | | Powder type additive |
|---|---|---|---|
| Example 1 | Resin 1 | 90 | 10 |
| Example 2 | | 80 | 20 |
| Example 3 | | 70 | 30 |
| Example 4 | Resin 2 | 90 | 10 |
| Example 5 | | 80 | 20 |
| Example 6 | | 70 | 30 |
| Example 7 | Resin 3 | 90 | 10 |
| Example 8 | | 80 | 20 |
| Example 9 | | 70 | 30 |
| Example 10 | Resin 4 | 90 | 10 |
| Example 11 | | 80 | 20 |
| Example 12 | | 70 | 30 |
| Comparative Example 1 | Resin 1 | 100 | 0 |
| Comparative Example 2 | Resin 2 | 100 | 0 |
| Comparative example 3 | Resin 3 | 100 | 0 |
| Comparative example 4 | Resin 4 | 100 | 0 |

| | | | |
|---|---|---|---|
| - resin 1: low-density polyethylene (LDPE) - resin 2: polyolefin elastomer (POE) - resin 3: ethylene vinyl acetate (EVA) - resin 4: ethylene propylene diene rubber (EPDM) - powder type additive: a powder type additive including a polyolefin cross-linked resin | | | |

### 2. Evaluation of physical properties

Tensile strength was measured at a tension speed of 250 mm/min at room temperature for samples of examples and comparative examples according to the IEC-60811-1-1-1 standard, and Shore A hardness was measured by a hardness meter. The measurement results are as shown in Table 2 below.

**[Table 2]**

| Example | Tensile strength (kgf/mm²) | Hardness |
|---|---|---|
| Example 1 | 1.653 | 93.86 |
| Example 2 | 1.667 | 95.76 |
| Example 3 | 1.804 | 96.2 |
| Example 4 | 2.709 | 75.62 |
| Example 5 | 2.976 | 80.3 |
| Example 6 | 3.112 | 82.58 |
| Example 7 | 2.187 | 89.58 |
| Example 8 | 2.022 | 89.54 |
| Example 9 | 1.977 | 94.78 |
| Example 10 | 3.839 | 93.62 |
| Example 11 | 3.616 | 93.7 |
| Example 12 | 3.608 | 94.52 |
| Comparative Example 1 | 1.628 | 92.94 |
| Comparative Example 2 | 2.69 | 73.22 |
| Comparative example 3 | 2.139 | 87.66 |
| Comparative example 4 | 3.903 | 92.42 |

As shown in Table 2 above, it was confirmed that Examples 1 to 6, which include low-density polyethylene or polyolefin elastomer that has substantially the same chemical structure as the base resin of the powder type additive and thus is highly compatible with the base resin, were improved in terms of tensile strength or hardness, compared to Comparative Examples 1 and 2 to which the powder type additive was not added, and a degree of the improvement increased as the amount of the powder type additive increased. However, it was confirmed that tensile strength of Examples 7 to 12, which include ethylene vinyl acetate or ethylene propylene diene rubber that has a relatively different chemical structure from that of the basic resin of the powder type additive and thus is not compatible with the basic resin, decreased to a certain degree but hardness thereof increased sufficiently, compared to Comparative examples 3 and 4 to which the powder type additive was not added.

In particular, as shown in FIG. 2, a rubbery domain is shown in a photograph of a surface of a low-density polyethylene+powder type additive sample of Example 3, compared to a photograph of a surface of a low-density polyethylene sample of Comparative Example 1, and thus it is expected that sagging can be prevented and strength can be improved during extrusion.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

[Industrial Applicability]

[Sequence List Text]

## Claims

1. A powder type additive comprising a cross-linked resin, wherein the crosslinked resin comprises a cross-linked polyolefin-based resin, and has a gel fraction of 10 to 50% and a particle size (D₅₀) of 100 to 700 um.

2. The powder type additive of claim 1, wherein the cross-linked resin has a weight average molecular weight (Mw) of 10,000 or more.

3. The powder type additive of claim 1 or 2, wherein the cross-linked resin has a melting point of 110 °C or higher, specific gravity of 0.91 or more, tensile strength of 1.75 kgf/mm²or more, and elongation of 360% or more.

4. The powder type additive of claim 1 or 2, wherein the gel fraction of the cross-linked resin is in a range of 20 to 35%, and the particle size (D₅₀) is in a range of 150 to 500 um.

5. The powder type additive of claim 4, wherein the particle size (D₅₀) is in a range of 150 to 350 um.

6. The powder type additive of claim 1 or 2, wherein the polyolefin-based resin comprises at least one selected from the group consisting of low-density polyethylene (LDPE), linear low-density polyethylene (LLDPE), high-density polyethylene (HDPE), polypropylene (PP), polyolefin elastomer (POE), ethylene vinyl acetate (EVA), ethylene ethyl acrylate (EEA), ethylene butyl acrylate (EBA), ethylene propylene rubber (EPR), and ethylene propylene diene rubber (EPDM).

7. A resin composition comprising a base resin and the powder type additive of claim 1 or 2.

8. The resin composition of claim 7, wherein the powder type additive is contained in an amount of 10 to 30% by weight based on the total weight of the resin composition.

9. The resin composition of claim 7, wherein the base resin and the polyolefin-based resin of the powder type additive are the same resin.

10. The resin composition of claim 7, wherein Shore A hardness is 80 or more and tensile strength is 1.6 kgf/mm² or more.
